# EUROPÄISCHE PATENTANMELDUNG

(11) **EP 1 547 910 A2**
(43) Veröffentlichungstag der Anmeldung: **29.06.2005**
(21) Anmeldenummer: 04028685.8
(22) Anmeldetag: 03.12.2004
(51) Int. Cl.: B62D 51/02

(54) **Gefederte Fahrerplattform**

(30) Priorität: 20.12.2003 DE 10360298
(71) Anmelder: STILL S.A.R.L., 77107 Meaux Cedex (FR)
(72) Erfinder: Fageot, Jean-Marc, 60300 Senlis (FR)
(74) Vertreter: Lang, Michael

(57) **Zusammenfassung**

Die Erfindung betrifft eine gefederte Fahrerplattform (11) für ein deichselgeführtes Flurförderzeug (1) mit mindestens einer mittels eines Federelements (18) gefederten Standplatte (13). Es ist zusätzlich mindestens ein Dämpfungselement (27) zur Dämpfung der Bewegung der mindestens einen gefederten Standplatte (13) der Fahrerplattform (11) vorgesehen.

## Beschreibung

Die Erfindung betrifft eine gefederte Fahrerplattform für ein deichselgeführtes Flurförderzeug mit mindestens einer mittels eines Federelements gefederten Standplatte. Deichselgeführte Flurförderzeuge sind einfach zu bedienen, besitzen eine große Wendigkeit und sind kostengünstig. Da die Bedienperson beim Führen des Fahrzeugs jedoch neben oder vor diesem geht, sind keine großen Geschwindigkeiten möglich, so dass derartige Fahrzeuge vorzugsweise auf kurzen Transportstrecken eingesetzt werden. Um deichselgeführte Fahrzeuge für längere Fahrtstrecken tauglich zu machen, sind Ausführungsformen mit feststehenden oder beweglichen Fahrerplattformen vorgesehen, auf die eine Bedienperson aufsteigen und mit dem Fahrzeug mitfahren kann. Da die Bedienperson auf dem Fahrzeug mitfährt, können größere Fahrtgeschwindigkeiten und damit auch größere Umschlagsleistungen als bei Mitgängergeräten erreicht werden. Derartige Fahrzeuge weisen dann auch bisweilen von der herkömmlichen Deichselform abweichende Lenkvorrichtungen auf, werden aber immer noch als Deichselgerät bezeichnet und können außer als Hubwagen beispielsweise auch als Kommisioniergerät ausgeführt sein.

Deichselgeführte Flurförderzeuge für Mitfahrbetrieb weisen zumeist nur relativ kleine Antriebsräder beziehungsweise Lastrollen auf, die praktisch ungefedert sind. Selbst kleine Fahrbahnunebenheiten werden daher direkt auf eine auf der Plattform stehende Bedienperson übertragen. Um dies zu vermeiden, gibt es einfache Federungssysteme, bei denen beispielsweise eine an einer Seite um eine horizontale Achse beweglich gelagerte Fahrerplattform auf an der anderen Seite angebrachten Schraubenfedem abgestützt ist. Durch eine derart gefederte Fahrerplattform werden zwar grobe Stöße gut abgefangen, es kommt jedoch zu einem lästigen Nachschwingen der Plattform, das die Bedienperson in ihrer Standfestigkeit beeinträchtigt und von dieser als unangenehm empfunden wird. Bei periodischen Stößen, beispielsweise aufgrund einer Unrundheit eines Antriebsrades oder einer gepflasterten Fahrbahn kann es zu einem Aufschaukeln der Nachschwingbewegung kommen, die die Bedienperson zu einer Geschwindigkeitsreduzierung zwingt. Gummipufferelemente bieten neben fedemder Wirkung auch noch eine gewisse Dämpfung. Dabei sind jedoch die Federwege relativ kurz und die Dämpfung nicht optimal auf die Federung abgestimmt.

Der Erfindung liegt daher die Aufgabe zugrunde, eine gefederte Fahrerplattform für ein deichselgeführtes Flurförderzeug mit mindestens einer mittels eines Federelements gefederten Standplatte zu schaffen, die eine gute Federwirkung besitzt und gleichzeitig eine optimierte Dämpfung, die ein nachteiliges Nachschwingen der Plattform vermeidet.

Diese Aufgabe wird erfindungsgemäß dadurch gelöst, dass zusätzlich mindestens ein Dämpfungselement zur Dämpfung der Bewegung der mindestens einen gefederten Standplatte der Fahrerplattform vorgesehen ist. Die Plattform kann dadurch nicht mehr frei schwingen und kommt nach einer Auslenkung aus ihrer Ruhelage schnell wieder zum Stillstand. Ein Aufschaukeln der Bewegung wird unterbunden. Das von der Federung unabhängige Dämpfungselement kann so gewählt werden, dass sowohl die Federungseigenschaften, insbesondere der Federweg, als auch die Dämpfung der Schwingbewegungen optimal sind.

Vorteilhafterweise ist mindestens ein Dämpfungselement in seiner Dämpfungswirkung einstellbar. Dadurch ist es möglich, die Dämpfung den Betriebsbedingungen anzupassen, beispielsweise an das Gewicht der Bedienperson oder deren persönliches Fahrgefühl.

Es ist von besonderem Vorteil, wenn mindestens ein Dämpfungselement als Reibelement ausgebildet ist. Reibelemente sind einfach herstellbar, kostengünstig, sehr gut an die jeweilige Einbausituation anpassbar und einfach als in der Wirkung verstellbar auszuführen.

In einer weiteren vorteilhaften Ausbildung ist mindestens ein Dämpfungselement als fluidmechanisches Dämpfungselement ausgebildet ist. Fluidmechanische Dämpfungselemente, die beispielsweise hydraulisch oder pneumatisch ausgeführt sein können, sind weitgehend wartungsfrei und leicht an die Einbaubedingungen anpassbar.

Vorteilhafterweise ist die mindestens eine Standplatte der Fahrerplattform um mindestens eine Drehachse beweglich gelagert. Dies ist eine besonders einfache und zuverlässige Möglichkeit, eine gefederte Fahrerplattform zu lagern.

Es ist von besonderem Vorteil, wenn mindestens ein Dämpfungselement auf die Drehachse der Standplatte der Fahrerplattform wirkt. Da die Bewegung der Fahrerplattform um diese Achse erfolgt, sind hier Dämpfungselemente besonders einfach anbringbar.

Es ist weiterhin besonders vorteilhaft, wenn mindestens ein Dämpfungselement als auf der Drehachse der Standplatte angeordnetes scheibenförmiges Element ausgebildet ist. Derartige Elemente sind einfach zu fertigen und es wird eine hinreichend große Oberfläche zur Verfügung gestellt, um die bei der Dämpfung der Bewegung der Fahrerplattform beispielsweise durch Reibung freiwerdende Energie abzuführen.

Zweckmäßigerweise weist mindestens ein Dämpfungselement mindestens eine Tellerfeder (27) auf: Bei Anordnung mindestens einer Tellerfeder beispielsweise auf der Drehachse der Fahrerstandplattform ergibt sich eine sehr gute Einstellbarkeit der Dämpfungswirkung, da durch die Verformbarkeit der Tellerfeder ein relativ großer Verstellweg gegeben ist.

Vorteilhafterweise wird die Fahrerplattform durch mindestens einen gefederten Standplattenteil und mindestens einen nicht gefederten Rahmenteil gebildet, wobei der nicht gefederte Rahmenteil der Fahrerplattform als Schutz vor Rammstößen für den gefederten Teil der Fahrerplattform ausgebildet ist. Insbesondere die Vorrichtungen, durch die die Beweglichkeit und Federung der Fahrerplattform erreicht werden, sind empfindlich gegenüber Beschädigungen, insbesondere Verformungen, wie sie in Folge von Rammstößen an der Fahrerplattform auftreten können. Durch die Unterteilung der Fahrerplattform in einen gefederten Standplattenteil und einen nicht gefederten Rahmenteil und die Ausbildung des nicht gefederten Rahmenteils als Stoßschutz für den gefederten Standplattenteil wird der bewegliche gefederte Standplattenteil vor Beschädigungen durch Stöße, die im Betrieb des Flurförderzeugs durch Unachtsamkeit der Bedienperson auftreten können, wirksam geschützt.

In einer vorteilhaften Ausbildung sind der nicht gefederte Rahmenteil der Fahrerplattform und der gefederte Standplattenteil der Fahrerplattform um eine gemeinsame Drehachse schwenkbar gelagert. Wird das Fahrzeug wechselweise sowohl im Mitgängerbetrieb als auch im Mitfahrbetrieb benutzt, ist eine klappbare Fahrerplattform vorteilhaft. Dadurch kann die gesamte Plattform auf einfache Weise hochgeklappt werden, so dass sie beim Betrieb des Flurförderzeugs im reinen Mitgängerbetrieb, beispielsweise beim Rangieren auf engem Raum, nicht hinderlich ist. Durch die gemeinsame Drehachse von Rahmenteil und gefederter Standplatte wird eine besonders einfache, Platz sparende und kostengünstige Bauweise erreicht.

In einer weiteren vorteilhaften Ausgestaltung ist am gefederten Standplattenteil eine Vorrichtung zur Übertragung von auf den gefederten Standplattenteil der Fahrerplattform bei Rammstößen, insbesondere in eingefedertem Zustand, auftretenden Kräften auf den feststehenden Rahmenteil der Plattform angebracht. Bei Ausführungsformen, bei denen die Standplatte nicht vollständig vom Rahmenteil umgeben ist, wird so dennoch vermieden, dass der weniger stabile und gegenüber Beschädigungen empfindlichere Standplattenteil beschädigt wird. Diese Vorrichtung kann auch integraler Teil der Standplatte sein.

Weitere Vorteile und Einzelheiten der Erfindung werden anhand des in den schematischen Figuren dargestellten Ausführungsbeispiels näher erläutert. Identische Teile in den verschiedenen Figuren sind mit identischen Bezeichnungen gekennzeichnet. Dabei zeigt
- Figur 1: einen Hubwagen mit einer erfindungsgemäßen Fahrerplattform in Seitenansicht,
- Figur 2: einen Hubwagen mit einer erfindungsgemäßen Fahrerplattform in Draufsicht,
- Figur 3: der Standbereich einer erfindungsgemäßen Fahrerstandplattform in Seitenansicht,
- Figur 4: der Standbereich einer erfindungsgemäßen Fahrerstandplattform in Draufsicht.

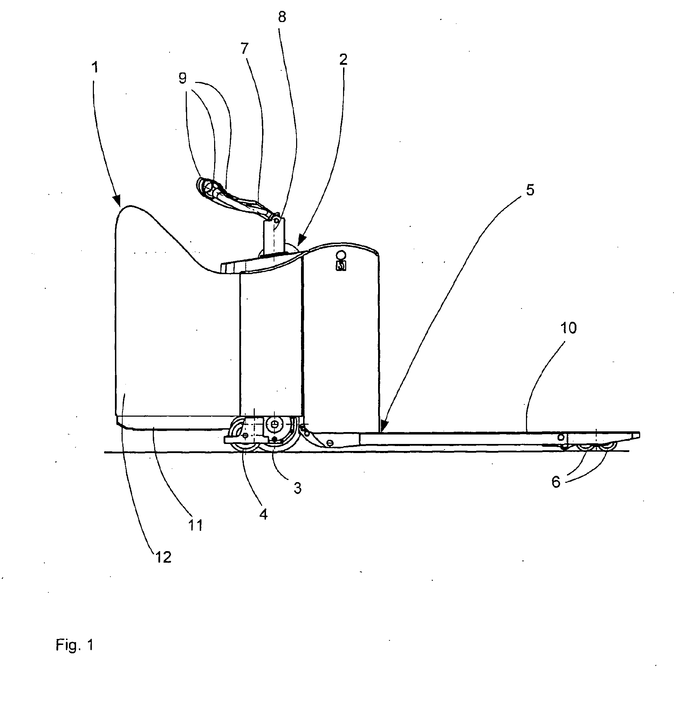

Figur 1 zeigt als Beispiel für ein erfindungsgemäßes Flurförderzeug einen Niederhubwagen 1 in Seitenansicht. Ein nicht anhebbarer Antriebsteil 2 steht mit einem Antriebsrad 3 und seitlichen Stützrädern 4 auf einer Fahrbahn auf. An dem Antriebsteil 2 ist ein Lastteil 5, der mit Lastrollen 6 auf der Fahrbahn abgestützt ist, höhenbeweglich befestigt. Bewegt die Bedienperson die Lenkdeichsel 7 um eine annähernd vertikale Achse 8, so dreht sich das Antriebsrad 3 ebenfalls um die Achse 8. Dadurch kann das Flurförderzeug 1 auf engem Raum manövriert werden. Die Bedienung der Funktionen des Flurförderzeugs 1 erfolgt ebenfalls an der Lenkdeichsel 7, an der entsprechende Bedienelemente 9 angebracht sind. Damit kann sowohl die Hubhöhe des Lastaufnahmemittels 10 als auch die Fahrgeschwindigkeit und Fahrtrichtung des Hubwagens 1 geregelt werden. Am Antriebsteil des Hubwagens 1 ist eine Fahrerplattform 11 angebracht, auf der die Bedienperson steht und den Hubwagen 1 mittels der Deichsel 7 bedient. Seitlich wird die Fahrerplattform 11 von Haltevorrichtungen 12 begrenzt, die ein Herunterfallen der Bedienperson beispielsweise bei Kurvenfahrt verhindern sollen.

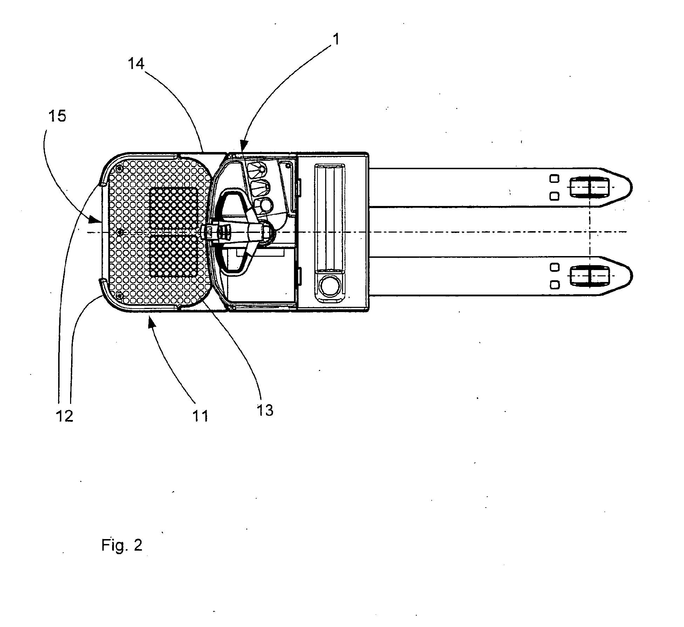

Wie in Figur 2, die einen Hubwagen 1 mit einer erfindungsgemäßen Fahrerplattform 11 in Draufsicht zeigt, zu erkennen ist, sind diese Haltevorrichtungen 12 auch teilweise in den hinteren Bereich der Plattform 11 fortgeführt, damit auch bei Anfahrvorgängen die Bedienperson Halt findet. Die gefederte Standplatte 13 der Fahrerplattform 11 wird von einem fest stehenden Rahmenteil 14 weitgehend umschlossen und ist so vor Rammstößen geschützt. Nur auf der hinteren Einstiegseite 15, wo eine Bedienperson die Standplatte 13 betritt und daher keine Haltevorrichtungen 12 angebracht sind, ist die Umfassung der Standplatte 13 durch das Rahmenteil 14 derart ausgenommen, dass auch bei eingefederter Standplatte 13 kein Teil des Rahmenteils 14 nach oben über die Standplatte 13 hinausragt. Diese Ausführung bietet den Vorteil, dass die Bedienperson auch nicht teilweise, beispielsweise mit den Absätzen, mit dem ungefederten Rahmenteil 14 der Fahrerplattform 11 in Kontakt kommt, so dass keine ungefederten Stöße übertragen werden. Durch dieses Prinzip wird außerdem vermieden, dass bei eingefederter Standplatte 13 ein Absatz zwischen Rahmenteil 14 und Standplatte 13 gegeben ist, über den eine Bedienperson stolpern könnte.

Die Oberfläche der Standplatte 13 der Fahrerstandplattform 11 ist besonders rutschfest ausgebildet, damit eine Bedienperson nicht bei abrupten Fahrmanövern den Halt verliert. Durch eine Totmannschaltung wird der Hubwagen automatisch abgebremst, sobald die Bedienperson die Standplatte 13 der Plattform 11 verlässt.

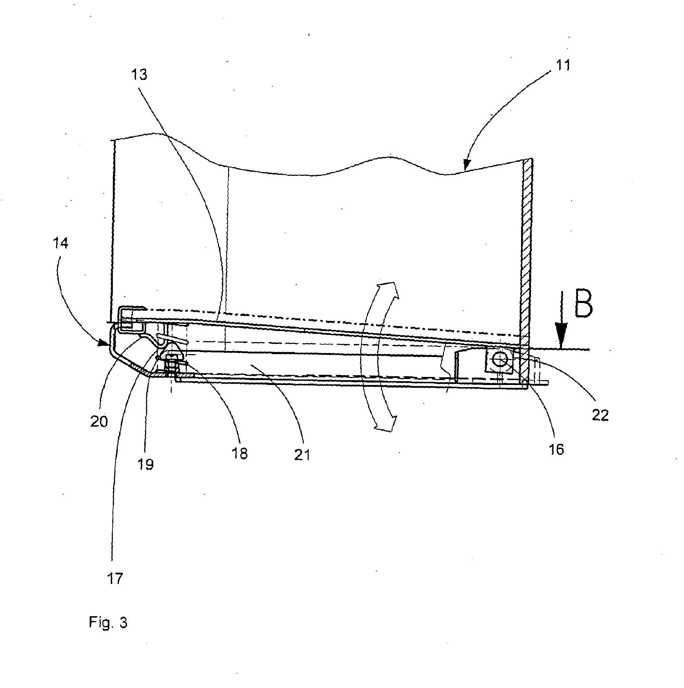

In Figur 3 ist der Standbereich der Fahrerplattform 11 in einer Schnittdarstellung durch die Fahrzeuglängsachse in Seitenansicht abgebildet. Die gefederte Standplatte 13 ist um eine Drehachse 16 beweglich gelagert und wird in unbelastetem Zustand von einem Federelement 17 nach oben gedrückt. Das Federelement besteht aus einer Schraubenfeder 18, die zur Abfederung von Stößen im Normalbetrieb dient, sowie einem kegelförmigen, gummielastischen Teil 19, der als Anschlagdämpfung in der unteren Endlage der gefederten Standplatte 13 dient, um besonders starke Stöße abzufangen.

Auf der Unterseite der Standplatte 13 ist eine Anschlagleiste 20 angeordnet, die bei eingefederter Plattform einer am Rahmenteil 14 angeordneten Anschlagschiene 21 gegenübersteht. Bei einem direkten Rammstoß an die Hinterkante 15 der Standplatte 13 wird die Anschlagleiste 20 gegen die Anschlagschiene 21, die Teil des Rahmenteils 14 ist, gedrückt und so durch Krafteinleitung in den Rahmenteil 14 einer weiteren Verformung der Standplatte 13, insbesondere im Bereich der Lagerblöcke 22, vorgebeugt. Gleichzeitig dient die Anschlagleiste 20 als Versteifung der Standplatte 13 in Querrichtung.

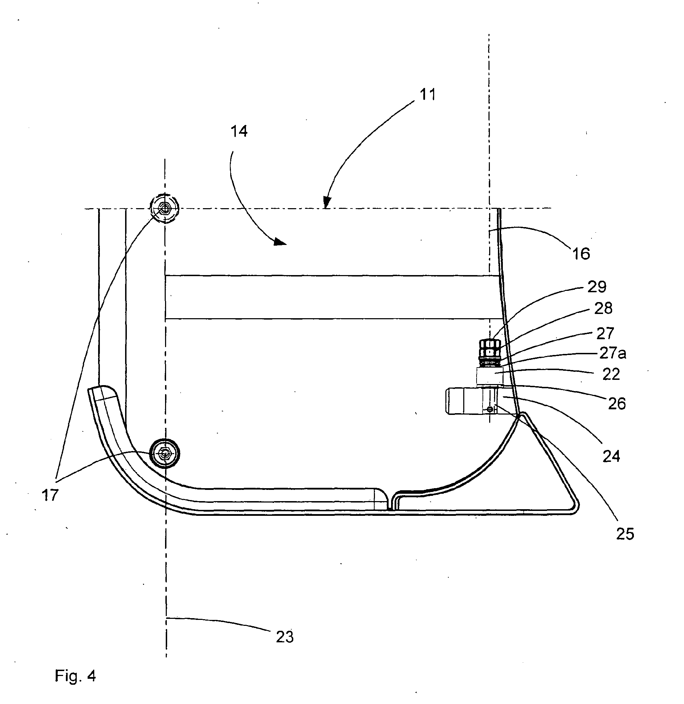

In Figur 4 ist der Standbereich einer erfindungsgemäßen Fahrerstandplattform 11 in Draufsicht in der Schnittebene B aus Figur 3 dargestellt. Entlang einer Fahrzeugquerachse 23 sind mehrere gleichartige Federelemente 17 angebracht. An der dem Antriebsteil 2 des Hubwagens 1 zugewandten Seite befindet sich am Rahmenteil 14 einer der Lagerblöcke 24, durch die die Drehachse 16, um die die Standplatte 13 der Fahrerplattform 11 drehbar gelagert ist, definiert wird. Die Drehachse 16 wird durch eine Welle 25 gebildet, deren eines Ende an dem mit dem Rahmenteil 14 verbundenen Lagerblock 24 angebracht ist. Auf dieser Welle ist ein weiterer Lagerblock 22 geführt, der mit der Standplatte 13 verbunden ist. Zwischen den Lagerblöcken 22 und 24 ist auf der Welle 25 noch eine Distanzscheibe 26 angeordnet. Auf der freien Seite der Welle 25 sind zur Dämpfung der Schwingbewegungen der Standplatte 13 Tellerfedern 27 angebracht, deren Spannung über eine Schraubenmutter 28 eingestellt wird. Durch die veränderte Spannung der Tellerfedem 27 erhöht sich die Reibung zwischen dem Lagerblock 22 und der daran anliegenden Tellerfeder 27a sowie zwischen dem Lagerblock 22, der Distanzscheibe 26 und dem Lagerblock 24, so dass eine erhöhte Dämpfung erzielt wird. Eine derartige Konstruktion ist auch bei den anderen Lagerstellen, durch die die Drehachse 16 verläuft, gegeben. Die Schraubenmutter 28 ist durch geeignete Maßnahmen nach dem Stand der Technik gegen Verstellung gesichert, im Ausführungsbeispiel durch eine Kontermutter 29 und beispielsweise durch eine Öffnung in der Standplatte 13 oder des Rahmenteils 14 zum Verstellen sowie für Wartungsarbeiten erreichbar. Durch geeignete Wahl der Anzahl der Tellerfedern 27 kann die Dämpfungswirkung und der dazu nötige Verstellweg variiert werden. Eine weitere Möglichkeit, dies zu beeinflussen ist die Wahl entsprechender Werkstoffe beziehungsweise Werkstoffkombinationen für Tellerfedern 27, Distanzscheibe 26, Schraubenmutter 28 und Lagerblöcke 22, 24.

Selbstverständlich sind auch andere Ausbildungsformen der Lagerung sowie Federung und Dämpfung der Standplatte 13 möglich. Beispielsweise kann die Welle 25 statt im Lagerblock 24 fixiert zu ein, auch im Lagerblock 22 befestigt sein und die Tellerfedern 27 dann auf der dem Lagerblock 22 abgewandten Seite des Lagerblocks 24 angebracht werden. Eine in beiden Lagerblöcken 22, 24 bewegliche Lagerung der Welle 25 ist ebenso möglich, wobei dann bei der Einstellung der Spannung der Tellerfedem 27 die Welle 25 gegen Verdrehen zu sichem ist. Auch eine durchgehende Lagerwelle, die in etwa die Breite der Standplattform 13 besitzt, ist denkbar. Mit einer zusätzlichen Lagerung dieser Welle am Antriebsteil 2 des Flurförderzeugs 1 ist auch eine abklappbare Fahrerplattform realisierbar. Bei dieser Lösung wird die Fahrerplattform um die Achse 16 von einer senkrechten Position, wie sie für den Betrieb des Flurförderzeugs 1 als Mitgängerfahrzeug gewählt wird, in eine waagerechte Position, wie sie in den Figuren für eine feststehende Fahrerplattform 11 gezeigt ist, abgeklappt. Durch eine Fixierung des feststehenden Teils der Fahrerplattform ist nur noch der gefederte Teil beweglich und das Fahrzeug kann im Mitfahrbetrieb betrieben werden.

Als Dämpfungsmaßnahmen sind in weiteren Ausgestaltungsformen auch fluidmechanische Dämpfungselemente nach dem Stand der Technik denkbar, sowohl in Form von auf der Achse angeordneten hydraulischen Drehbewegungsdämpfungsvorrichtungen als auch durch direkt oder über eine Hebelkonstruktion betätigte Zylinderkonstruktionen, bei denen eine Hydraulikflüssigkeit oder ein Gas die Dämpfungsfunktion übernimmt. Diese können beispielsweise parallel zu den Schraubenfedern 18 montiert sein oder aber parallel zur Fahrzeuglängsachse über einen zur Standplatte 13 und zur Achse 16 senkrechten Hebel betätigt werden. Diese Vorrichtungen sind aufwändiger als die gezeigte, auf Reibwirkung basierende Konstruktion, weisen dafür jedoch weniger Verschleiß auf. Gegebenenfalls kann bei fluidmechanischen Dämpfungselementen auch die Federfunktion integriert werden, so dass auf eine rein mechanische Federung verzichtet werden kann.

## Patentansprüche

1. Gefederte Fahrerplattform (11) für ein deichselgeführtes Flurförderzeug (1) mit mindestens einer mittels eines Federelements (18) gefederten Standplatte (13), **dadurch gekennzeichnet, dass** zusätzlich mindestens ein Dämpfungselement (27) zur Dämpfung der Bewegung der mindestens einen gefederten Standplatte (13) der Fahrerplattform (11) vorgesehen ist.

2. Gefederte Fahrerplattform nach Anspruch 1, **dadurch gekennzeichnet, dass** das Dämpfungselement in seiner Dämpfungswirkung einstellbar ist.

3. Gefederte Fahrerplattform nach Anspruch 1 oder 2, **dadurch gekennzeichnet, dass** das Dämpfungselement als Reibelement ausgebildet ist.

4. Gefederte Fahrerplattform nach Anspruch 1 oder 2, **dadurch gekennzeichnet, dass** das Dämpfungselement als fluidmechanisches Dämpfungselement ausgebildet ist.

5. Gefederte Fahrerplattform nach einem der Ansprüche 1 bis 4, **dadurch gekennzeichnet, dass** die mindestens eine Standplatte (13) der Fahrerplattform (11) um mindestens eine Drehachse (16) beweglich gelagert ist.

6. Gefederte Fahrerplattform nach einem der Ansprüche 1 bis 5, **dadurch gekennzeichnet, dass** mindestens ein Dämpfungselement (27) auf die Drehachse (16) der Standplatte (13) der Fahrerplattform (11) wirkt.

7. Gefederte Fahrerplattform nach einem der Ansprüche 1 bis 6, **dadurch gekennzeichnet, dass** mindestens ein Dämpfungselement als auf der Drehachse der Standplatte angeordnetes scheibenförmiges Element (26) ausgebildet ist.

8. Gefederte Fahrerplattform nach einem der Ansprüche 1 bis 7, **dadurch gekennzeichnet, dass** mindestens ein Dämpfungselement mindestens eine Tellerfeder (27) aufweist.

9. Gefederte Fahrerplattform nach einem der Ansprüche 1 bis 8, **dadurch gekennzeichnet, dass** die Fahrerplattform (11) durch mindestens einen gefederten Standplattenteil (13) und mindestens einen nicht gefederten Rahmenteil (14) gebildet wird, wobei der nicht gefederte Rahmenteil (14) der Fahrerplattform als Schutz vor Rammstößen für den gefederten Standplattenteil (13) der Fahrerplattform ausgebildet ist.

10. Gefederte Fahrerplattform nach einem der Ansprüche 1 bis 9, **dadurch gekennzeichnet, dass** der nicht gefederte Teil (14) der Fahrerplattform (11) und der gefederte Teil (13) der Fahrerplattform (11) um eine gemeinsame Drehachse (16) schwenkbar gelagert sind.

11. Gefederte Fahrerplattform nach einem der Ansprüche 1 bis 10, **dadurch gekennzeichnet, dass** am gefederten Standplattenteil (13) eine Vorrichtung (20) zur Übertragung von auf den gefederten Standplattenteil (13) der Fahrerplattform (11) bei Rammstößen, insbesondere in eingefedertem Zustand, auftretenden Kräften auf den feststehenden Rahmenteil (14) der Fahrerplattform (11) angebracht ist.
